# EUROPÄISCHE PATENTSCHRIFT

(11) **EP 1 864 196 B1**
(45) Veröffentlichungstag und Bekanntmachung des Hinweises auf die Patenterteilung: **01.12.2010**
(21) Anmeldenummer: 06723831.1
(22) Anmeldetag: 29.03.2006
(51) Int. Cl.: G06F 21/04

(54) **LESEGERÄT MIT INTEGRIERTER KRYPTOGRAPHIEEINHEIT**
READER WITH INTEGRATED ENCRYPTION UNIT
APPAREIL DE LECTURE A UNITE DE CRYPTAGE INTEGREE

(30) Priorität: 29.03.2005 DE 102005014194
(43) Veröffentlichungstag der Anmeldung: 12.12.2007
(73) Patentinhaber: Ahnert, Axel, 85737 Ismaning (DE); Grandy, Elmar, 85764 Oberschleissheim (DE); Müller, Harald, 85084 Langenbruck (DE); Nebendahl, Jan, 85737 Ismaning (DE)
(72) Erfinder: Ahnert, Axel, 85737 Ismaning (DE); Grandy, Elmar, 85764 Oberschleissheim (DE); Müller, Harald, 85084 Langenbruck (DE); Nebendahl, Jan, 85737 Ismaning (DE)
(74) Vertreter: Strasser, Wolfgang
(86) Internationale Anmeldenummer: PCT/EP2006/002862
(87) Internationale Veröffentlichungsnummer: WO 2006/103058

(56) Entgegenhaltungen:
- EP-A- 1 473 615
- WO-A-00/17758
- WO-A-2004/015516
- US-A- 5 768 386
- US-A1- 2004 128 519
- US-A1- 2005 066 186
- US-B1- 6 270 011
- US-B1- 6 560 709

## Beschreibung

Die Erfindung betrifft eine Vorrichtung zum Lesen und Verschlüsseln sensibler Daten gemäß dem Oberbegriff des Patentanspruchs 1, sowie ein entsprechendes Verfahren gemäß dem Oberbegriff des Patentanspruchs 7.

In vielen Bereichen des täglichen Leben, wie z.B. beim Abheben von Geld an Geldautomaten, der Anmeldung in Arztpraxen oder bei der Kommunikation mit Behörden, wie z.B. dem Finanzamt, wird vom Kunden der Nachweis seiner Identität bzw. Berechtigung verlangt. Die korrekte Identifizierung des Nutzers ist i. d. R. Voraussetzung für die Freigabe weiterer Schritte, wie z.B. der Auszahlung von Geld. Zum Durchführen von Identitäts- bzw. Berechtigungsnachweisen sind verschiedenste Verfahren und Systeme aus dem Stand der Technik bekannt.

Ein besonders häufig verwendetes System umfasst einen Kartenleser, der die auf einer Magnet- oder Chipkarte gespeicherten Daten ausliest. Daneben wird der Benutzer i. d. R. zusätzlich zur Eingabe einer Geheimzahl (PIN) oder eines Passworts aufgefordert. Andere Identifikationssysteme arbeiten z. B. mit Scannern zur Erfassung biometrischer Daten, wie z.B. eines Fingerabdrucks oder der Irisstruktur des Auges. Die erfassten Daten werden üblicherweise an einen entfernt angeordneten Server übertragen, wo sie weiter verarbeitet und verwaltet werden. Hierzu werden die Daten zunächst an einen lokalen Rechner gesendet, dort verschlüsselt und über das Internet an den zentralen Server übertragen. Aus Gründen der Datensicherheit ist es von höchster Wichtigkeit, dass die Daten sicher übertragen werden und zu keinem Zeitpunkt für nicht berechtigte Dritte zugänglich sind.

Durch moderne Verschlüsselungsverfahren, wie z.B. PGP, ist es zwar möglich, die Übertragung der Daten über das Internet hinreichend sicher zu gestalten, dadurch kann jedoch nicht verhindert werden, dass die Daten direkt auf dem Rechner, auf dem sie erhoben werden, abgegriffen werden. So ist es beispielsweise möglich, den am Lesegerät angeschlossenen Rechner mit einem Programm (z. B. einem so genannten Trojaner) zu infizieren und mit Hilfe dieses Programms die Nutzerdaten zu speichern und an nicht berechtigte Dritte weiterzuleiten. Dies hätte zur Folge, dass unberechtigte Dritte in den Besitz höchst sensibler Identifikationsdaten kommen würden und beliebige Leistungen, wie z.B. Auszahlungen, Überweisungen, etc. in betrügerischer Weise nutzen könnten.

Aus der US-2005/0066186 A1 sind ein Verfahren und eine Vorrichtung zum Verschlüsseln einer Tastatur bekannt, mit dem durch das Anschlagen von Tasten erzeugte Daten mit Hilfe einer an die Tastatur angeschlossenen Kryptographieeinheit verschlüsselt und dann über ein Netzwerk an einen entfernt angeordneten Empfänger übertragen werden. Zu diesem Zweck weist die Tastatur eine Schnittstelle auf, über welche die verschlüsselten Daten zunächst an einen lokal angeordneten Rechner und von dort über das Netzwerk an den Empfänger gesendet werden. Die Sicherheitsstufe bei dieser Datenverschlüsselung ist jedoch relativ gering.

Es ist daher die Aufgabe der vorliegenden Erfindung, die Sicherheit von Identifikationssystemen weiter zu verbessern und das Eindringen unberechtigter Dritter zu verhindern.

Gelöst wird diese Aufgabe gemäß der Erfindung durch die im Patentanspruch 1, sowie im Patentanspruch 6 angegebenen Merkmale. Weitere Ausgestaltungen der Erfindung ergeben sich aus den Unteransprüchen.

Ein wesentlicher Gedanke der Erfindung besteht darin, die von einem Lesegerät erfassten Daten mittels einer am Gerät angeschlossenen Kryptographieeinheit zu verschlüsseln und erst die verschlüsselten Daten einem lokalen Rechner zuzuführen, der sie (direkt oder indirekt) über ein Fernübertragungsnetzwerk überträgt. Die Kryptographieeinheit fordert hierzu vom entfernt angeordneten Empfänger einen ersten Schlüssel an und erzeugt selbst einen zweiten Schlüssel. Dies hat den wesentlichen Vorteil, dass die sensiblen Identifikationsdaten nur in verschlüsselter Form und damit für unberechtigte Dritte nicht verwertbar am lokalen Netzwerk-Rechner vorliegen. Selbst wenn es Dritten gelingen sollte, in den Netzwerk-Rechner einzudringen, könnten sie die Nutzerdaten nicht lesen, da sie bereits verschlüsselt sind.

Die Kryptographieeinheit ist vorzugsweise eine Vorrichtung, die zusammen mit der Leseeinheit in einem Gerät baulich integriert ist.

Die eingelesenen Daten können komprimiert oder reduziert werden, um die Datenmenge für die Übertragung zu verringern. Die Datenreduktion erfolgt vorzugsweise mittels entsprechender Software in der Kryptographieeinheit.

Die Kryptographieeinheit ist vorzugsweise über eine Hardware-Schnittstelle mit dem lokalen Rechner verbunden. Hierzu kann eine beliebige aus dem Stand der Technik bekannte Schnittstelle, wie z.B. eine USB-Schnittstelle, eine Parallel- oder eine serielle Schnittstelle verwendet werden. Wahlweise könnte die Kryptographieeinheit auch über ein lokales Netzwerk mit dem lokalen Rechner verbunden sein.

Die Kryptographieeinheit ist vorzugsweise in Hardware realisiert und umfasst z. B. einen Mikrokontroller mit einem Verschlüsselungsalgorithmus zur Verschlüsselung der eingelesenen Daten.

Die Kryptographieeinheit umfasst vorzugsweise einen Verschlüsselungsalgorithmus, der vorzugsweise einen alternierenden Schlüssel erzeugt. D.h. jeder neu erzeugte Schlüssel unterscheidet sich von einem vorhergehenden. Die Sicherheit der Datenübertragung kann dadurch weiter erhöht werden.

Im folgenden wird das erfindungsgemäße Verfahren zum sicheren Übertragen von Daten näher erläutert. Das Einlesen und Übertragen der persönlichen Daten umfasst im wesentlichen folgende Schritte: zunächst werden die vom Nutzer bereitgestellten Daten (z.B. ein Fingerabdruck oder eine EC-Karte) von einer Leseeinheit erfasst und an eine Kryptographieeinheit übertragen. Dort werden die Daten mittels eines vorgegebenen Algorithmus verschlüsselt. Die verschlüsselten Daten werden dann z. B. über eine Hardware-Schnittstelle an einen lokal angeordneten Rechner und von dort über ein Fernübertragungsnetzwerk an einen anderen am Netzwerk angeschlossenen Rechner (z. B. einen Server) übertragen. Dadurch, dass am sendeseitigen Netzwerk-Rechner nur verschlüsselte Daten vorliegen, ist es bei ausreichend hoher Sicherheitsstufe der Verschlüsselung nahezu unmöglich, die ursprünglichen Daten zu rekonstruieren.

Gemäß einer bevorzugten Ausführungsform der Erfindung wird ein Verschlüsselungsverfahren durchgeführt, das wenigstens zwei Schlüssel verwendet. Dabei wird auf Anforderung zunächst ein erster Schlüssel erzeugt - vorzugsweise vom späteren Datenempfänger - und dieser Schlüssel über das Netzwerk und den lokalen Rechner an die Kryptographieeinheit übertragen. Der erste Schlüssel wird vorzugsweise automatisch angefordert, wenn vom Benutzer ein neuer Daten-Lesevorgang gestartet wird.

Die Kryptographieeinheit erzeugt daraufhin einen zweiten Schlüssel sowie einen aus dem ersten und dem zweiten Schlüssel gebildeten kombinierten Schlüssel. Die Identifikationsdaten des Nutzers werden dann mit Hilfe des kombinierten Schlüssels verschlüsselt. Darüber hinaus wird der zweite Schlüssel vorzugsweise mittels des ersten Schlüssels (oder umgekehrt) verschlüsselt. Die verschlüsselten Identifikationsdaten als auch der verschlüsselte zweite Schlüssel werden dann über den lokalen Rechner und das Netzwerk (z.B. das Internet) an den entfernt angeordneten Rechner gesendet. Dort können die persönlichen Daten schließlich entschlüsselt und weiter verarbeitet werden.

Die Kryptographieeinheit erzeugt vorzugsweise einen alternierenden zweiten Schlüssel. Dadurch kann die Sicherheit der Datenübertragung weiter verbessert werden.

Eine noch höhere Sicherheitsstufe kann erreicht werden, wenn der Schlüssel-Anforderungsbefehl, der vom lokalen Rechner an den externen Rechner gesendet wird, ständig variiert und beispielsweise wenigstens einen Teil eines zuvor empfangenen ersten Schlüssels enthält. Dadurch kann eine unberechtigte Schlüsselanforderung einfach erkannt werden. In diesem Fall wird vorzugsweise eine Warnmeldung erzeugt.

Eine andere Maßnahme zur Verbesserung der Übertragungssicherheit besteht darin, einen Schlüssel oder eine andere Information packetweise zu übertragen und ggf. zusätzlich den Erhalt der Daten zu bestätigen.

Bei Empfang eines Schlüssels wird vorzugsweise eine Gültigkeitsprüfung durchgeführt, im Rahmen derer z.B. die Schlüssellänge, eine Quersumme des Schlüssels oder eine andere Schlüssel-Eigenschaft überprüft wird. Derartige Verfahren sind aus dem Stand der Technik hinreichend bekannt.

Die Schlüssel können neben der eigentlichen Code-Information auch eine zusätzliche Information, wie z.B. eine Zeitangabe oder eine Schlüsselnummer enthalten. Dadurch wird es in einfacher Weise möglich, die Gültigkeit des Schlüssels zu überprüfen. Ein Schlüssel kann z.B. als gültig erkannt werden, wenn der Schlüssel innerhalb einer vorgegebenen Zeit nach seiner Anforderung empfangen wurde. Andernfalls verliert der Schlüssel seine Gültigkeit.

Gemäß einer speziellen Ausführungsform der Erfindung erzeugen die Kryptographieeinheit und der externe Rechner für jede Kommunikation vorzugsweise mehrere Schlüssel A bzw. B, die jeweils nur für eine Kommunikation Gültigkeit haben. Der zentrale Rechner erzeugt beispielsweise die Schlüssel Aₙ, An', Aₙ" und die Kryptographieeinheit die Schlüssel Bₙ, Bₙ', Bₙ" . Der Index n steht dabei für die n-te Kommunikation, wobei n eine ganze Zahl ist. Ein Überblick über die verschiedenen Schlüssel ergibt sich aus folgender Tabelle 1:

| Schlüssel | Ersteller | Lokation |
|---|---|---|
| Aₙ | ZS | ZS |
| Aₙ' | Z S | K |
| Aₙ" | ZS | ZS |
| Bₙ | K | K |
| Bₙ' | K | Z S |
| Bₙ" | K | K |

Dabei steht die Bezeichnung ZS für den externen Rechner (Zentralsystem) und K für die Kryptographieeinheit.

Jeweils einer der Schlüssel (z. B. Aₙ', Bₙ') wird vorzugsweise an den anderen Kommunikationspartner übertragen. (Bezüglich des Schlüssels Aₙ' vgl. z. B. Zeile 3 der obigen Tabelle). Mittels der übrigen Schlüssel Aₙ, Aₙ" bzw. Bₙ, Bₙ" und dem vom Kommunikationspartner erhaltenen Schlüssel Bₙ' bzw. Aₙ' erzeugt dann jede der Einheiten wenigstens zwei kombinierte Schlüssel Cₙ, Cₙ" bzw. Dₙ, Dₙ" . Die kombinierten Schlüssel C, D dienen später zum Verschlüsseln von Kryptographiedaten oder anderen Informationen, die über das Netzwerk gesendet werden sollen.

Die Erzeugung und Zusammensetzung der einzelnen kombinierten Schlüssel (Metaschlüssel) ergibt sich aus folgender Tabelle 2:

| Schlüssel | Hersteller | bestehend aus | Korrespondenzschlüssel | Lokation |
|---|---|---|---|---|
| Cₙ | Z | Aₙ' X Bₙ | Dₙ" | Z |
| Cₙ" | Z | Aₙ' X Bₙ" | Dₙ | Z |
| Dₙ | ZS | Aₙ x Bₙ' | Cₙ" | ZS |
| Dₙ" | ZS | Aₙ" X Bₙ' | Cₙ | ZS |

Grundsätzlich gilt, dass jede Information, die mit einem Schlüssel Xₙ' (X steht dabei als Platzhalter für Schlüssel A bzw. B) verschlüsselt wurde, von einem Schlüssel Xₙ entschlüsselbar ist. Gleichermaßen kann jede Information, die mit einem Schlüssel Xₙ" verschlüsselt wurde, mit einem Schlüssel Xₙ' entschlüsselt werden. Ein Schlüssel Xₙ hat dagegen keinen direkten Bezug zu einem anderen Schlüssel Xₙ".

Die in den Spalten "Schlüssel" und "Korrespondenzschlüssel" aufgeführten Schlüssel C bzw. D stehen dagegen in Beziehung zueinander, wobei jeweils ein Schlüssel mit der höheren Ableitung (z. B. Cₙ" oder Dₙ") von einen korrespondierenden Schlüssel (z. B. Cₙ oder Dₙ) mit der niedrigeren Ableitung entschlüsselt werden kann.

Im Folgenden soll eine Kommunikation zwischen dem Zentralsystem und der Kryptographieeinheit beispielhaft für die Kommunikation n=1 betrachtet werden. Für die aktuell erzeugten Schlüssel gilt somit n = 1, und für die in einer vorhergehenden Kommunikation erstellten Schlüssel A, B, C, D n = 0.

Die Kommunikation beginnt damit, dass die Kryptographieeinheit vom externen Rechner einen ersten Schlüssel Aₙ' anfordert. Hierzu erstellt sie einen Anforderungsstring x₀ und verschlüsselt diesen mit einem Schlüssel C₀", bildet also x₀ x C₀". Die Verschlüsselung des Anforderungsstrings x1 ist hierbei optional.

Der String wird dann über das Netzwerk an den externen Rechner übertragen, der die Information mittels des Schlüssels D₀ entschlüsselt (siehe Tabelle 2, Z. 4). Wenn die Anforderung x₀ verstanden wurde, erzeugt der externe Rechner die Schlüssel A₁, A₁' und A₁". Die Schlüssel A₁ und A₁" verbleiben im Rechner, während A₁' über das Netzwerk an die Kryptographieeinheit übertragen wird. Der erste Schlüssel A₁' kann ebenfalls verschlüsselt werden, z.B. mit einem kombinieren Schlüssel D₀". Es wird also eine Information A₁' x D₀" gebildet. Diese Information wird von der Kryptographieeinheit mit dem kombinierten Schlüssel C₀ entschlüsselt (siehe auch Tabelle 2, Z. 2). Falls dabei ein gültiger erster Schlüssel A₁' extrahiert werden kann, erstellt die Kryptographieeinheit im folgenden die Schlüssel B₁, B₁' und B₁". Die Schlüssel B₁ und B₁" verbleiben wieder in der Kryptographieeinheit, während der zweite Schlüssel B₁' an den zentralen Rechner übertragen wird. Der zweite Schlüssel B₁' wird dabei vorzugsweise mit dem ersten Schlüssel A₁' verschlüsselt, d. h. es wird eine Information B₁' x A₁' erzeugt. Diese Information wird im zentralen Rechner mit Hilfe des Schlüssels A₁ entschlüsselt und auf ihre Gültigkeit überprüft.

Beide Kommunikationspartner (Kryptographieeinheit und externer Rechner) enthalten nun einen vom anderen Kommunikationspartner erzeugten Schlüssel B₁' bzw. A₁', sowie weitere, selbst erzeugte Schlüssel A₁, A₁" bzw. B₁, B₁". Die Kryptographieeinheit erzeugt daraus zwei kombinierte Schlüssel, nämlich C₁ und C₁" wie dies in Tabelle 2 angegeben ist. In gleicher Weise erzeugt der externe Rechner zwei kombinierte Schlüssel D₁ und D₁", wie ebenfalls in Tabelle 2 angegeben ist.

Die von der Leseeinrichtung aufgenommenen Daten x₁ können nun mit dem Schlüssel C₁" verschlüsselt werden, wobei eine verschlüsselte Information x₁ x C₁" gebildet wird, die von der Kryptographieeinheit an den zentralen Rechner versandt wird. Im zentralen Rechner wird dann die Information X₁ x C₁" mit Hilfe des kombinierten Schlüssels D₁ entschlüsselt.

Nachdem die entschlüsselten biometrischen Daten im Rechner extrahiert wurden, wird vorzugsweise eine Antwort x₂ erzeugt, die vorzugsweise mit dem Schlüssel D₁" verschlüsselt und an die Kryptographieeinheit zurückgesendet wird. Die Verschlüsselung ist wiederum optional. Die Kryptographieeinheit entschlüsselt dann die Information x₂ x D₁" mit dem Schlüssel C₁ und extrahiert somit die Antwort x₂. Die Kommunikation ist damit beendet und wiederholt sich beim nächsten Lesevorgang biometrischer Daten.

Die Erfindung wird nachstehend anhand der beigefügten Zeichnungen beispielhaft näher erläutert. Es zeigen:
Fig. 1 eine schematische Blockdarstellung eines Systems zur Erfassung und sicheren Übertragung von Identifikationsdaten über ein Fernübertragungsnetz; und
Fig. 2 die wesentlichen Verfahrensschritte eines Verfahrens zum sicheren Übertragen von Identifikationsdaten gemäß einer Ausführungsform der Erfindung.

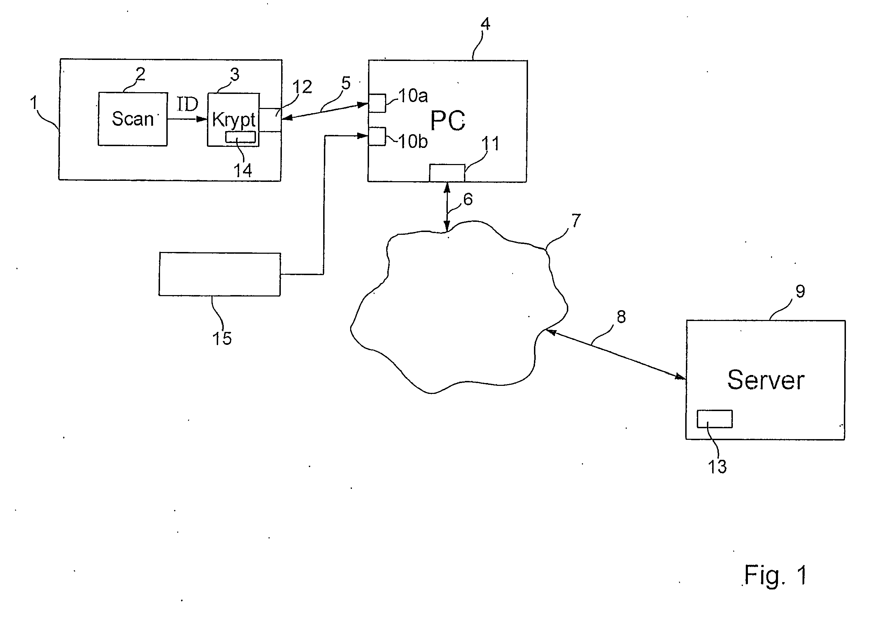

Fig. 1 zeigt ein System zum Erfassen und Übertragen von Identifikationsdaten über ein Fernübertragungsnetz 7, wie z.B. das Internet. Im dargestellten Ausführungsbeispiel umfasst das System einen Fingerabdruck-Scanner 1 mit einer Scannereinheit 2 und einer daran angeschlossenen Kryptographieeinheit 3. (Alternativ könnte auch ein Kartenleser oder ein anderes Lesegerät vorgesehen sein). Die Kryptographieeinheit 3 ist hier als Hardware realisiert, die im Gehäuse der Scannereinheit 2 baulich integriert ist. Die Kryptographieeinheit 3 umfasst eine Software, mit der die eingelesenen Daten verschlüsselt werden.

Der Scanner 1 ist über eine Hardware-Schnittstelle 12 mit einem lokalen Rechner 4 verbunden, der am Fernübertragungsnetz 7 angeschlossen ist. Das System umfasst außerdem einen zweiten, externen Rechner 9 (z.B. einen Server), der ebenfalls am Fernübertragungsnetz 7 angeschlossen ist.

Die dargestellten Datenverbindungen 5, 6 und 8 zwischen den einzelnen Geräten 1, 4 und 9 können drahtgebunden oder drahtlos sein.

Im Rahmen einer Identifikations-Prozedur wird zunächst der Fingerabdruck des Nutzers gelesen und die entsprechenden Daten an die Kryptographieeinheit 3 übertragen. Dort werden die Daten mittels eines vorgegebenen Algorithmus verschlüsselt. Die verschlüsselten Daten werden dann an den Rechner 4 und von dort über das Netzwerk 7 an den Server 9 übertragen. Am Rechner 4 liegen daher nur verschlüsselte Daten vor, so dass es, auch wenn es gelingen sollte, von außen in den Rechner 4 einzudringen, nahezu unmöglich ist, die ursprünglichen Daten zu entschlüsseln.

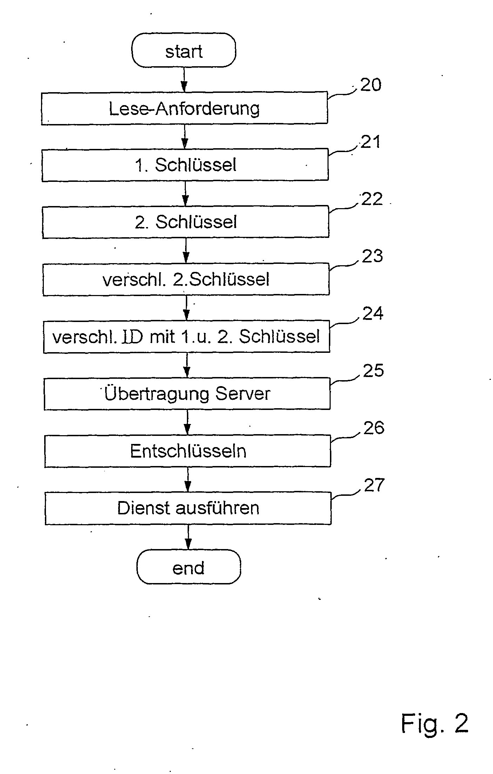

Fig. 2 zeigt die wesentlichen Verfahrensschritte eines bevorzugten Verschlüsselungsverfahrens in Form eines Flussdiagramms. Wenn sich ein Nutzer am Scanner 1 identifizieren will und hierzu seinen Finger auf das Lesefenster der Scannereinheit 2 legt, wird dies erkannt und an den Rechner 4 gemeldet. Dieser sendet dann in Schritt 20 einen Schlüssel-Anforderungsbefehl an den Server 9. Der Befehl enthält vorzugsweise eine Identifikationskennung des Scanners 1 und ggf. weitere Informationen, wie z.B. eine Zeitinformation. Der Server erzeugt daraufhin in Schritt 21 einen ersten Schlüssel 13 und sendet diesen über das Fernübertragungsnetz 7 zurück an den Rechner 4 und den Scanner 1. Bei ordnungsgemäßem Erhalt des ersten Schlüssels 13 innerhalb einer vorgegebenen Zeit, wird dies durch entsprechende Rückmeldung an den zentralen Server 9 bestätigt. Andernfalls verliert der Schlüssel seine Gültigkeit.

Nach Erhalt des ersten Schlüssels 13 erzeugt die Kryptographieeinheit 3 in Schritt 22 einen zweiten Schlüssel 14. Sowohl der erste als auch der zweite Schlüssel 13 bzw. 14 sind vorzugsweise alternierende Schlüssel. Dadurch wird jede Gleichmäßigkeit im Verschlüsselungsverfahren ausgeschlossen, die einen Angriffspunkt für mögliche Manipulationen bieten könnte.

In Schritt 23 verschlüsselt die Kryptographieeinheit 3 dann den zweiten Schlüssel 14 mit Hilfe des ersten Schlüssel 13. Daneben werden in Schritt 24 die Identifikationsdaten (ID) mit einem aus dem ersten und dem zweiten Schlüssel 13 bzw. 14 gebildeten kombinierten Schlüssel verschlüsselt. Vor der Verschlüsselung können die Identifikationsdaten bei Bedarf auch komprimiert oder anderweitig reduziert werden. Die verschlüsselten Daten als auch der verschlüsselte zweite Schlüssel 14 werden dann über den Rechner 4 und das Fernübertragungsnetz 7 an den Server 9 gesendet (Schritt 25). Dort werden die Daten in Schritt 26 schließlich entschlüsselt. Die Daten können dann weiter verarbeitet und verschiedene Dienste, die vom Benutzer angefordert wurden, ausgeführt werden.

Zur weiteren Verbesserung der Datensicherheit kann ein Schlüssel z.B. auch in mehrere Pakete aufgeteilt werden, die jeweils vom Empfänger (z.B. dem Scanner 1) bestätigt werden müssen. Dadurch kann mit hoher Sicherheit festgestellt werden, dass der erste Schlüssel 13 auch vom Scanner 1 erhalten wurde. Alternativ könnte auch jeder Schlüssel 13 mit einer Kennung, z.B. einer Schlüsselnummer versehen sein, die vom Lesegerät 1 bestätigt wird. Am Server 9 kann somit eine mögliche Manipulation erkannt werden.

Eine weitere Verbesserung der Datensicherheit kann erreicht werden, wenn sich jeder Scanner 1 bzw. andere Lesegeräte 1 durch eine verschlüsselte Kommunikation beim zentralen Server 9 anmelden. Somit kann ausgeschlossen werden, dass fremde Scanner 1 bzw. Lesegeräte 1 installiert werden und mit dem Server 9 kommunizieren.

### Bezugszeichenliste

- 1: Lesegerät
- 2: Leseeinheit
- 3: Kryptographieeinheit
- 4: Rechner
- 5: Datenleitung
- 6: Netzwerkverbindung
- 7: Fernübertragungsnetzwerk
- 8: Netzwerkverbindung
- 9: zentraler Server
- 10: Hardware-Schnittstellen
- 11: Netzwerk-Schnittstelle
- 12: PC-Schnittstelle
- 13: erster Schlüssel
- 14: zweiter Schlüssel
- 15: Eingabeeinheit
- 20-26: Verfahrensschritte

## Patentansprüche

1. Vorrichtung zum Lesen und Verschlüsseln von Identifikationsdaten, die über ein Netzwerk (7) an einen entfernt angeordneten Empfänger (9) übertragen werden sollen, umfassend eine Leseeinheit (2) zum Lesen der Daten und eine daran angeschlossene Kryptographieeinheit (3) zum Verschlüsseln der Daten, wobei die Kryptographieeinheit (3) eine Schnittstelle (12) aufweist, über welche die verschlüsselten Daten (ID) zunächst an einen lokal angeordneten Rechner (4) und von dort über das Netzwerk (7) an den Empfänger (9) gesendet werden,
**dadurch gekennzeichnet,**
**dass** die Kryptographieeinheit (3) zum Durchführen eines Datenübertragungsverfahrens eingerichtet ist, bei dem sie:
- einen Schlüssel-Anforderungsbefehl an den Empfänger (9) sendet,
- einen vom Empfänger (9) erzeugten ersten Schlüssel empfängt,
- selbst einen zweiten Schlüssel (14) erzeugt,
- den zweiten Schlüssel (14) verschlüsselt,
- die von der Leseeinheit (2) eingelesenen Identifikationsdaten (ID) mit Hilfe eines aus dem ersten (13) und einem zweiten Schlüssel gebildeten kombinierten Schlüssels verschlüsselt, und
- die verschlüsselten Identifikationsdaten (ID) und den verschlüsselten zweiten Schlüssel über den ersten Rechner (4) und das Netzwerk (7) an den Empfänger (9) übersendet.

2. Vorrichtung nach Anspruch 1, **dadurch gekennzeichnet, dass** die Schnittstelle (12) eine Hardwareschnittstelle, z.B. USB, ist.

3. Vorrichtung nach Anspruch 1 oder 2, **dadurch gekennzeichnet, dass** die Kryptographieeinheit (3) in Hardware realisiert ist.

4. Vorrichtung nach einem der vorhergehenden Ansprüche, **dadurch gekennzeichnet, dass** die Leseeinheit (2) und die Kryptographieeinheit (3) als bauliche Einheit realisiert sind.

5. Vorrichtung nach einem der vorhergehenden Ansprüche, **dadurch gekennzeichnet, dass** die Kryptographieeinheit (3) einen alternierenden Schlüssel (14) erzeugt und die eingelesenen Daten (ID) mit diesem Schlüssel (14) verschlüsselt werden.

6. Verfahren zum sicheren Übertragen von Identifikationsdaten, insbesondere von Fingerabdrücken oder auf Karten gespeicherten Informationen, die von einer Leseeinheit (2) gelesen, verschlüsselt und über ein Netzwerk (7) an einen Empfänger (9) übertragen werden, wobei folgende Schritte durchgeführt werden:
- Einlesen von Daten (ID) mittels der Leseeinheit (2)
- Verschlüsseln der eingelesenen Daten mittels einer Kryptographieeinheit (3), und
- Übertragen der verschlüsselten Daten über eine Schnittstelle (12) an einen lokal angeordneten Rechner (4) und danach über ein Netzwerk (7) an den Empfänger (9),
**dadurch gekennzeichnet,**
**dass** die Kryptographieeinheit (3):
- einen Schlüssel-Anforderungsbefehl an den Empfänger (9) überträgt,
- einen vom Empfänger (9) erzeugten ersten Schlüssel empfängt,
- selbst einen zweiten Schlüssel (14) erzeugt,
- den zweiten Schlüssel (14) verschlüsselt,
- die eingelesenen Identifikationsdaten (ID) mit Hilfe eines aus dem ersten (13) und einem zweiten (14) Schlüssel gebildeten kombinierten Schlüssels verschlüsselt, und
- die verschlüsselten Identifikationsdaten (ID) und den verschlüsselten zweiten Schlüssel über den ersten Computer (4) und das Netzwerk (7) an den Empfänger (9) übersendet.

7. Verfahren nach Anspruch 6, **dadurch gekennzeichnet, dass** die Daten zwischen der Kryptographieeinheit (3) und dem ersten Computer (4) über eine Hardware-Schnittstelle (12) übertragen werden.

8. Verfahren nach Anspruche 6 oder 7, **dadurch gekennzeichnet, dass** die Kryptographieeinheit (3) einen alternierenden zweiten Schlüssel (14) erzeugt.

9. Verfahren nach einem der vorhergehenden Ansprüche 6 bis 8, **dadurch gekennzeichnet, dass** die Lesevorrichtung (1) einen Schlüssel-Anforderungsbefehl (20) an den zweiten Computer (9) sendet, wenn ein Lesevorgang durchgeführt werden soll.

10. Verfahren nach Anspruch 9, **dadurch gekennzeichnet, dass** der Schlüssel-Anforderungsbefehl wenigstens einen Teil eines von der Kryptographieeinheit (3) bereits empfangenen ersten Schlüssels (13) umfasst.

## Claims

1. A device for reading and encrypting identification data which are to be transmitted by way of a network (7) to a remotely arranged receiver (9), including a reading unit (2) for reading the data and an encryption unit (3) connected thereto for encrypting the data, wherein the encryption unit (3) has an interface (12), by way of which the encrypted data (ID) are firstly sent to a locally arranged computer (4) and from there by way of the network (7) to the receiver (9),
**characterised in that**
the encryption unit (3) is adapted to carry out a data transmission method in which it:
- sends a key request command (20) to the receiver (9),
- receives a first key (13) generated by the receiver (9),
- generates itself a second key (14),
- encrypts the second key (14),
- encrypts the identification data (ID) read in by the reading unit (2) by means of a combined key formed from the first key (13) and a second key, and
- sends the encrypted identification data (ID) and the encrypted second key by way of the first computer (4) and the network (7) to the receiver (9).

2. A device according to claim 1 **characterised in that** the interface (12) is a hardware interface, for example USB.

3. A device according to claim 1 or claim 2 **characterised in that** the encryption unit (3) is implemented in hardware form.

4. A device according to one of the preceding claims **characterised in that** the reading unit (2) and the encryption unit (3) are embodied in the form of a structural unit.

5. A device according to one of the preceding claims **characterised in that** the encryption unit (3) generates an alternate key (14) and the read-in data (ID) are encrypted with said key (14).

6. A method of securely transmitting identification data, in particular fingerprints or information stored on cards, which are read by a reading unit (2), encrypted and transmitted by way of a network (7) to a receiver (9), wherein the following steps are carried out:
- reading in data (ID) by means of the reading unit (2),
- encrypting the read-in data by means of an encryption unit (3),
- transmitting the encrypted data by way of an interface (12) to a locally arranged computer (4) and thereafter by way of a network (7) to the receiver (9),
**characterised in that**
the encryption unit (3
- sends a key request command (20) to the receiver (9),
- receives a first key (13) generated by the receiver (9),
- generates itself a second key (14),
- encrypts the second key (14),
- encrypts the read-in identification data (ID) by means of a combined key formed from the first key (13) and a second key (14), and
- sends the encrypted identification data (ID) and the encrypted second key by way of the first computer (4) and the network (7) to the receiver (9).

7. A method according to claim 6 **characterised in that** the data are transmitted between the encryption unit (3) and the first computer (4) by way of a hardware interface (12).

8. A method according to claim 6 or claim 7 **characterised in that** the encryption unit (3) generates an alternate second key.

9. A method according to one of preceding claims 6 to 8 **characterised in that** the reading device (1) sends a key request command (20) to the second computer (9) when a reading operation is to be executed.

10. A method according to claim 9 **characterised in that** the key request command includes at least a part of a first key (13) already received by the encryption unit (3).

## Revendications

1. Dispositif de lecture et d'encodage de données d'identification devant être transmises par l'intermédiaire d'un réseau (7) à un récepteur (9) distant, comportant une unité de lecture (2) pour la lecture des données et une unité cryptographique (3) raccordée à celle-ci pour l'encodage des données, l'unité cryptographique (3) comportant une interface (12) au moyen de laquelle les données encodées (ID) sont d'abord envoyées à un ordinateur (4) local et de là adressées au récepteur (9) par l'intermédiaire du réseau (7),
**caractérisé**
**en ce que** l'unité cryptographique (3) est prévue pour l'exécution d'un processus de transmission de données au cours duquel :
- elle adresse une instruction de demande de code au récepteur (9),
- reçoit un premier code généré par le récepteur (9),
- génère elle-même un deuxième code (14),
- encode le deuxième code (14),
- encode les données d'identification (ID) lues par l'unité de lecture (2) au moyen d'un code combiné formé à partir du premier code (13) et d'un deuxième code, et
- transmet au récepteur (9) les données d'identification (ID) encodées et le deuxième code encodé par l'intermédiaire du premier ordinateur (4) et du réseau (7).

2. Dispositif selon la revendication 1, **caractérisé en ce que** l'interface (12) est une interface matérielle, telle qu'un port USB.

3. Dispositif selon la revendication 1 ou la revendication 2, **caractérisé en ce que** l'unité cryptographique (3) est réalisée dans le matériel.

4. Dispositif selon l'une des revendications précédentes, **caractérisé en ce que** l'unité de lecture (2) et l'unité cryptographique (3) sont réalisées comme unité de construction.

5. Dispositif selon l'une des revendications précédentes, **caractérisé en ce que** l'unité cryptographique (3) génère un code alternant (14) et **en ce que** les données (ID) lues sont encodées avec ce code (14).

6. Procédé pour une transmission sûre de données d'identification, en particulier d'empreintes digitales ou d'informations mémorisées sur des cartes, lues par une unité de lecture (2), encodées et transmises à un récepteur (9) par l'intermédiaire d'un réseau (7), les étapes suivantes étant exécutées :
- lecture de données (ID) au moyen de l'unité de lecture (2),
- encodage des données lues au moyen d'une unité cryptographique (3), et
- transmission des données encodées à un ordinateur (4) local par l'intermédiaire d'une interface (12), et ensuite au récepteur (9) par l'intermédiaire d'un réseau (7),
**caractérisé**
**en ce que** l'unité cryptographique (3) :
- transmet une instruction de demande de code au récepteur (9),
- reçoit un premier code généré par le récepteur (9),
- génère elle-même un deuxième code (14),
- encode le deuxième code (14),
- encode les données d'identification (ID) lues par l'unité de lecture (2) au moyen d'un code combiné formé à partir du premier code (13) et d'un deuxième code (14), et
- transmet au récepteur (9) les données d'identification (ID) encodées et le deuxième code encodé par l'intermédiaire du premier ordinateur (4) et du réseau (7).

7. Procédé selon la revendication 6, **caractérisé en ce que** les données sont transmises entre l'unité cryptographique (3) et le premier ordinateur (4) par l'intermédiaire d'une interface matérielle (12).

8. Procédé selon la revendication 6 ou la revendication 7, **caractérisé en ce que** l'unité cryptographique (3) génère un deuxième code alternant (14).

9. Procédé selon l'une des revendications 6 à 8, **caractérisé en ce que** le dispositif de lecture (1) adresse une instruction de demande de code (20) au deuxième ordinateur (9) si un processus de lecture doit être exécuté.

10. Procédé selon la revendication 9, **caractérisé en ce que** l'instruction de demande de code comprend au moins une partie d'un premier code (13) déjà reçu par l'unité cryptographique (3).
